# EUROPÄISCHE PATENTSCHRIFT

(11) **EP 1 318 442 B1**
(45) Veröffentlichungstag und Bekanntmachung des Hinweises auf die Patenterteilung: **27.10.2004**
(21) Anmeldenummer: 01128799.2
(22) Anmeldetag: 04.12.2001
(51) Int. Cl.: G05B 19/404

(54) **Verfahren zum lagegenauen Steuern wenigstens einer industriellen kinetischen Einrichtung, insbesondere wenigstens eines Industrieroboters**
Method for performing exact position control of at least one industrial kinetic installation, especially at least one industrial robot
Procédé pour effectuer le contrôle de position exact d'au moins une installation industrielle cinétique, notamment d'un robot industriel

(43) Veröffentlichungstag der Anmeldung: 11.06.2003
(73) Patentinhaber: Hydro-Control Steuerungstechnik GmbH, 26180 Rastede (DE)
(72) Erfinder: Stoyke, Markus, 26169 Friesoythe (DE)
(74) Vertreter: Jabbusch, Matthias, Dipl.-Ing.

(56) Entgegenhaltungen:
- WO-A-97/46925
- DE-A- 4 203 994
- DE-A- 19 848 642
- US-A- 5 136 223
- US-A- 5 408 758

## Beschreibung

Die Erfindung betrifft Verfahren zum lagegenauen Steuern wenigstens einer industriellen kinetischen Einrichtung, insbesondere wenigstens eines Industrieroboters, bei dem eine Steuerungssoftware der kinetischen Einrichtung verwendet wird, und bei dem in eine Bedienungssoftware, welche der Steuerungssoftware vorgeschaltet ist, Steuerungsbefehle für die kinetische Einrichtung in Form jeweils eines NC - Steuerungsbefehls eingegeben werden, wobei der eingegebene NC - Steuerungsbefehl zumindest einem Kompensationsprozeß zum Herstellen einer größeren Lagegenauigkeit unterworfen wird und anschließend der NC - Steuerungsbefehl in eine Anweisung der Steuerungssoftware der Einrichtung umgesetzt wird.

Industrielle kinetische Einrichtungen werden insbesondere in der Automatisierungstechnik für das Ablaufen verschiedenster Fertigungsprozesse eingesetzt. Diese kinetischen Einrichtungen sind dabei regelmäßig als Industrieroboter ausgebildet, die über bewegbare Roboterarme verfügen, an denen beispielsweise Werkzeuge befestigt werden können.

Für die Ansteuerung eines Industrieroboters wird regelmäßig eine Datenverarbeitungsanlage verwendet, die über geeignete drahtgebundene oder drahtlose Verbindungen mit dem Industrieroboter kommuniziert. Auf der Datenverarbeitungseinrichtung wird eine Software, nämlich eine Steuerungssoftware des Industrieroboters, betrieben.

Handelsübliche Industrieroboter weisen eine Positioniergenauigkeit von + / - 3 mm auf. Diese Positioniergenauigkeit ist für viele Anwendungsbereiche unbefriedigend. Auch die Wiederholgenauigkeit handelsüblicher Industrieroboter in Höhe von + / - 0,15 mm bis 0,3 mm ist für viele Anwendungsbereiche unbefriedigend.

Verfahren der eingangs genannten Gattung wurden bereits in der DE 198 48 642 A1 und der WO 97/46925 aufgezeigt. In der DE 198 48 642 A1 ist dabei ein Verfahren zur Kompensation von Temperatureinflüssen auf das lagegenaue Steuern einer Werkzeugmaschine offenbart.

Der Erfindung liegt die Aufgabe zugrunde, ein Steuerungsverfahren der eingangs genannten Gattung aufzuzeigen, mit dem ein lagegenaues Steuern insbesondere eines Industrieroboters mit einer hohen Positioniergenauigkeit und einer hohen Wiederholgenauigkeit durchführbar ist.

Diese Aufgabe ist erfindungsgemäß dadurch gelöst, daß jeder Kompensationsprozeß durch ein Datenverarbeitungsprogramm durchgeführt wird, in dem ein n - dimensionales Kennfeld in den Bewegungsbereich der kinematischen Einrichtung gelegt wird und für eine endliche Zahl von Punkten in diesem Kennfeld auf die kinematische Einrichtung wirkende Größen Lage, Orientierung und Gewicht ermittelt werden und bei nachfolgenden Bewegungen der kinematischen Einrichtung in eine Korrektur der Bewegung bewirkender Weise berücksichtigt werden.

Bei dem erfindungsgemäßen Verfahren zum Steuern insbesondere eines Industrieroboters wird davon ausgegangen, nicht allein die Steuerungssoftware des Industrieroboters zu verwenden. Es ist vorgesehen, daß eine von der Steuerungssoftware des Industrieroboters unabhängige Bedienungssoftware eingesetzt wird, die ihrerseits die Steuerungssoftware des Industrieroboters ansteuert.

In die Bedienungssoftware werden vorteilhaft von einem Anwender Befehle im NC - Steuerungsbefehlformat eingegeben. NC - gesteuerte Werkzeugmaschinen sind weit verbreitet, so daß Steuerungssoftware für NC - Maschinen gleichfalls weit verbreitet ist. Diese Steuerungssoftware hat sich seit vielen Jahren im Einsatz bewährt. Viele Bedienungspersonen von Werkzeug - Maschinen kennen diese Software und können mit dieser umgehen.

In die Bedienungssoftware kann mit besonderem Vorteil ein Befehl für den Industrieroboter im Offline - Zustand eingegeben werden. Zu einem definierten Zeitpunkt wird dieser Befehl dann ausgeführt, wobei in die Bedienungssoftware der NC - Steuerungsbefehl eingelesen wird. Dieser Befehl wird anschließend in eine Anweisung der Steuerungssoftware der Einrichtung umgesetzt, woraufhin die Einrichtung, insbesondere der Industrieroboter, diesen Befehl ausführen kann.

Im Umsetzungsprozeß von NC - Steuerungsbefehl in eine Anweisung der Steuerungssoftware wird der wenigstens eine Kompensationsprozeß durch ein Datenverarbeitungsprogramm durchgeführt. In diesem wird ein n - dimensionales Kennfeld in die Bewegungsweg der kinematischen Einrichtung gelegt. Für eine endliche Anzahl von Punkten in diesem Kennfeld werden auf die kinematische Einrichtung wirkende Größen Lage, Orientierung und Gewicht ermittelt und bei nachfolgenden Bewegungen der kinematischen Einrichtung in eine Korrektur der Bewegung bewirkender Weise berücksichtigt.

Der NC - Steuerungsbefehl wird somit mit den Umgebungsbedingungen abgeglichen. Diese Umgebungsbedingungen sind in der Bedienungssoftware enthalten, sie wurden vorher durch Messungen aufgenommen. Durch diese Kompensationsprozesse wird eine Positioniergenauigkeit von + / - 0,2 mm erreicht. Die Wiederholgenauigkeit beträgt vorteilhaft + / - 0,05 mm bis 0,2 mm.

Das erfindungsgemäße Verfahren ermöglicht somit eine lagegenaue Steuerung einer kinetischen Einrichtung, insbesondere eines Industrieroboters.

Die erfindungsgemäß eingesetzte Bedienungssoftware, in welche die NC - Steuerungsbefehle eingelesen werden, ist vorzugsweise modulartig aufgebaut. So werden von der Bedienungssoftware beispielsweise ein Visualisierungsmodul, ein NC - Steuerungsmodul, ein Fehlermanagementmodul und ein Sensorikmodul bereitgestellt.

Jeder eingelesene NC - Steuerungsbefehl kann beispielsweise einem Lagekompensationsprozeß unterworfen sein. Dabei werden die auf den beweglichen Teil des Industrieroboters einwirkenden Kräfte in definierten Lagepunkte bei der Ausübung des NC - Steuerungsbefehls berücksichtigt. Um eine wiederholbare Kompensationsmöglichkeit zu schaffen, wird dabei vorzugsweise vor Einsatz des Industrieroboters in das Bewegungsfeld ein n - dimensionales Kennfeld gelegt und werden bei definierten Punkten innerhalb dieses Kennfeldes die in einzelnen Lagen auf den bewegbaren Teil des Industrieroboters einwirkenden Kräfte aufgenommen. Die dabei ermittelten Meßwerte werden bei späteren Arbeiten des Industrieroboters im Bereich dieses Kennfeldes bei der Ansteuerung des Industrieroboters berücksichtigt. Insoweit nimmt die Steuerung des Industrieroboters auf verschiedene Lagezustände des bewegbaren Teils des Industrieroboters Rücksicht.

Weitere Kompensationsprozesse können vorgesehen sein, beispielsweise ein Orientierungskompensationsprozeß und ein Gewichtskompensationsprozeß. Ein Gewichtskompensationsprozeß ist erforderlich, wenn für den Fertigungsprozeß verschiedene Werkzeuge mit unterschiedlichen Gewichten und Schwerpunkten am Industrieroboter angeschlossen werden. Durch eine integrierte Werkzeugerkennung wird jedes Werkzeug speziell kompensiert. Mit diesem Prozeß ist ermöglicht, mit den verschiedenen Werkzeugen am Industrieroboter den gleichen Raumpunkt mit hoher Genauigkeit in der Lage und Orientierung anzufahren. Diese verschiedenen Kompensationsprozesse führen schrittweise zu einer immer verbesserten Lagegenauigkeit.

Bei einem Bauteilkompensationsprozeß werden die Bauteilkoordinaten des NC - Steuerungsbefehls in das Koordinatensystem eines Arbeitsraumes des Industrieroboters umgesetzt. Dabei werden die Aufstellungsfehler des Bauteilträgers insbesondere für Werkzeuge und die Unterschiede der verschiedenen Bauteilaufnahmen berücksichtigt und kompensiert. Nach dieser Kompensation ist die Bauteilkoordinate in das Arbeitsraumkoordinatensystem umgesetzt worden.

Bei einem Anpresskompensationsprozeß werden Effekte, die bei einem Zusammenstoß eines Werkzeuges am Roboter und dem Werkstück entstehen, kompensiert. Diese Effekte beziehen sich hauptsächlich auf das Ausweichen des Industrieroboters aufgrund der entstehenden Kräfte beim Andrücken des Werkzeuges.

Bei einem Roboterkompensationsprozeß wird der Roboter im Arbeitsraum kompensiert. Mit diesem Verfahren werden die individuellen mechanischen Ungenauigkeiten des Industrieroboters im Arbeitsraum kompensiert, beispielsweise Längenfehler der Achsen und Aufstellungsfehler. Bei einem Achskompensationsprozeß wird jede Achse speziell kompensiert. Dabei wird die Umkehrlose und die Elastizität der Antrieb kompensiert, um einen Raumpunkt mit hoher Genauigkeit auch aus verschiedenen Richtungen anfahren zu können.

Sämtliche Kompensationsprozesse werden in der Bedienungssoftware durchgeführt.

Als Ansteuerung des Industrieroboters wird der NC - Steuerungsbefehl nach dem Kompensationsprozeß in für die Bewegung der kinematischen Einrichtung geeignete Achs - Koordinaten transformiert.

Zur Verdeutlichung der Erfindung werden zwei Figuren beigefügt. Es zeigen:
- Fig. 1: den modulartigen Aufbau der Bedienungssoftware, und
- Fig. 2: den Programmablauf in einem Teil der Bedienungssoftware nach Fig. 1

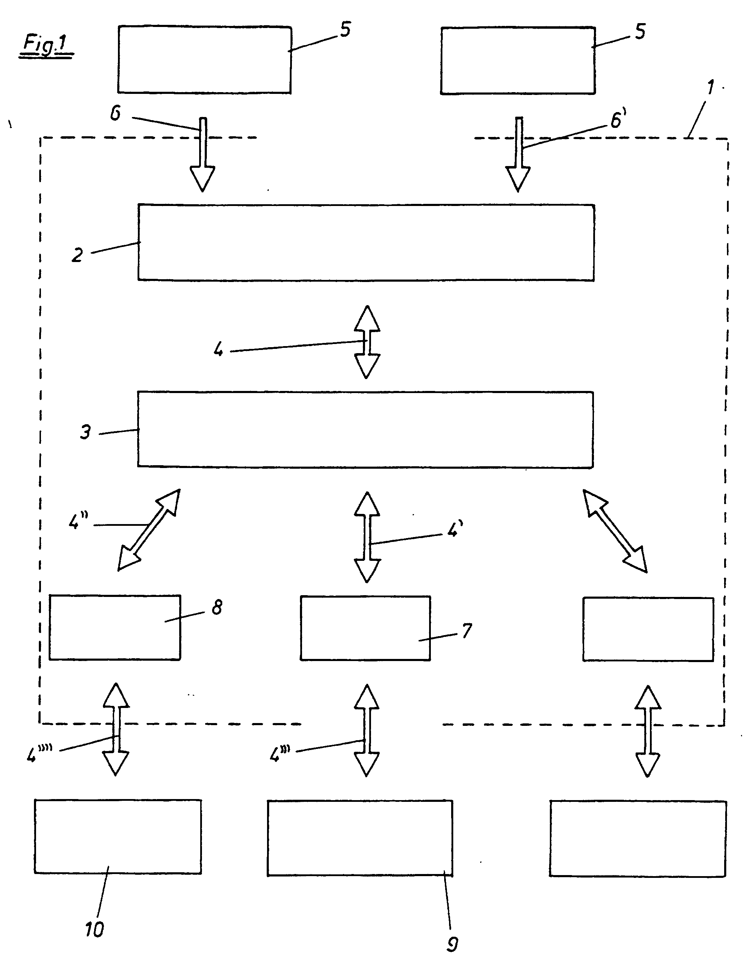

Die Bedienungssoftware in Fig. 1 ist mit ihren Modulteilen durch eine schraffierte Linie 1 umgrenzt. Die Software enthält zwei Module 2, 3, mit denen NC - Steuerungsbefehle verarbeitet werden können. So ist das Modul 2 als NC - Editor - Modul 2 ausgebildet. Mit diesem steht ein NC - Interpretermodul 3 in Verbindung, wie durch den Doppelpfeil 4 verdeutlicht.

Das NC - Editor - Modul 2 bildet eine Schnittstelle zum Anwender aus. Über eine Eingabevorrichtung 5, beispielsweise eine Tastatur, sind Eingaben des Anwenders in das NC - Editor - Modul 2 ermöglicht, wie mit dem Pfeil 6 dargestellt. Parallel zu Eingaben des Anwenders können über eine weitere Eingabevorrichtung 5 CAD - Daten in den NC - Editor eingegeben werden (Pfeil 6). Die in das NC - Editor - Modul 2 eingegebenen Daten werden im NC - Interpretermodul 3 umgesetzt. Die Umsetzung erfolgt in einen NC - Steuerungsbefehl, der entlang des Doppelpfeils 4' in ein Robotermodul 7 übermittelt wird. Entlang des Doppelpfeils 4" erfolgt eine weitere Übermittlung des aktuellen NC - Befehles aus dem NC - Interpretermodul 3 in ein Bohrvorschubmodul 8. Weitere Module sind möglich.

Durch das Robotermodul 7 wird der NC - Steuerungsbefehl in einen Roboterfahrbefehl umgesetzt und wird dieser über den Doppelpfeil 4''' an die Robotersteuerung 9 übermittelt. Eine ähnliche Übermittlung erfolgt von dem Bohrvorschubmodul 8 entlang des Doppelpfeiles 4'''' an eine Bohrvorschubeinheit 10.

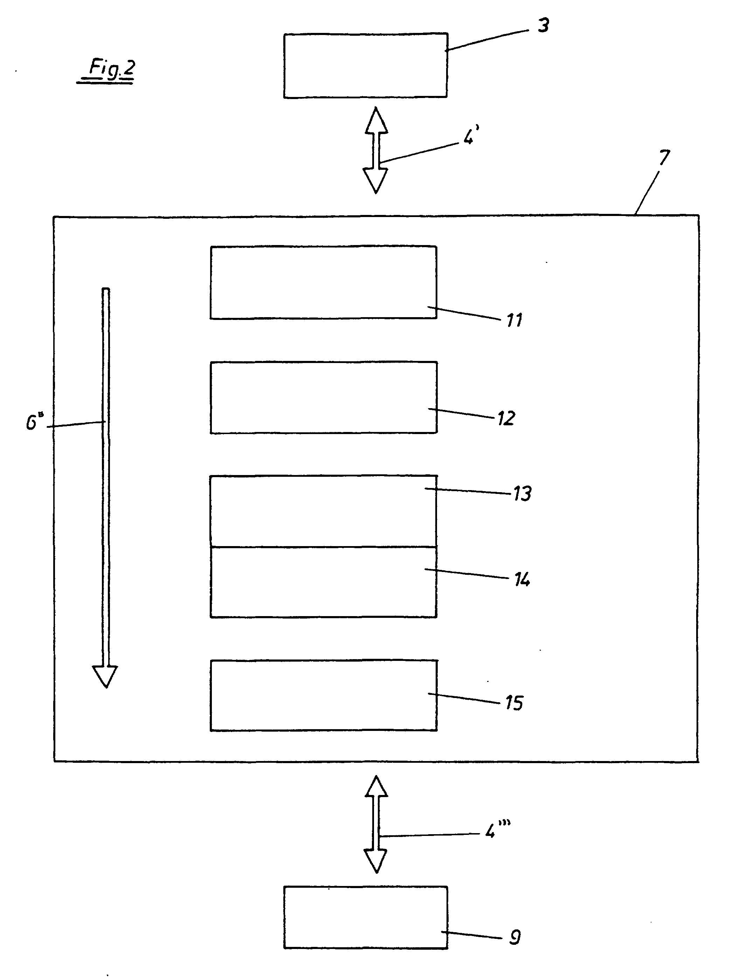

Fig. 2 zeigt einen Ausschnitt aus dem Schema nach Fig. 1, wobei das Robotermodul 7 vergrößert dargestellt ist. Von dem NC - Interpretermodul 3 wird der NC - Steuerungsbefehl in Form von Bauteilkoordinaten entlang des Doppelpfeils 4' dem Robotermodul 7 übermittelt. Der NC - Steuerungsbefehl wird in das Robotermodul 7 eingelesen und entlang der durch den Pfeil 6" vorgegebenen Bearbeitungsreihenfolge mehreren Kompensations - Modulen zugeführt. Diese Module sind ein Bauteilkompensationsmodul 11, ein Anpreßkompensationsmodul 12, ein Roboterkompensationsmodul 13, ein Gewichtskompensationsmodul 14 und ein Achskompensationsmodul 15. In diesen Modulen 11, 12, 13, 14, 15 werden die verfahrensgemäß vorgesehenen Kompensationen durchgeführt. Nach Durchführen dieser Kompensationsverfahren wird der kompensierte Roboterfahrbefehl in Form von Roboterkoordinaten entlang des Doppelpfeils 4''' der Robotersteuerung 9 zugeführt.

## Patentansprüche

1. Verfahren zum lagegenauen Steuern wenigstens einer industriellen kinetischen Einrichtung, insbesondere wenigstens eines Industrieroboters, bei dem eine Steuerungssoftware der kinetischen Einrichtung verwendet wird, und bei dem in eine Bedienungssoftware, welche der Steuerungssoftware vorgeschaltet ist, Steuerungsbefehle für die kinetische Einrichtung in Form jeweils eines NC - Steuerungsbefehls eingegeben werden, wobei der eingegebene NC - Steuerungsbefehl zumindest einem Kompensationsprozeß zum Herstellen einer größeren Lagegenauigkeit unterworfen wird und anschließend der NC - Steuerungsbefehl in eine Anweisung der Steuerungssoftware der Einrichtung umgesetzt wird,
**dadurch gekennzeichnet,**
**daß** jeder Kompensationsprozeß durch ein Datenverarbeitungsprogramm durchgeführt wird, in dem ein n - dimensionales Kennfeld in den Bewegungsbereich der kinematischen Einrichtung gelegt wird und für eine endliche Zahl von Punkten in diesem Kennfeld auf die kinematische Einrichtung wirkende Größen Lage, Orientierung und Gewicht ermittelt werden und bei nachfolgenden Bewegungen der kinematischen Einrichtung in eine Korrektur der Bewegung bewirkender Weise berücksichtigt werden.

2. Verfahren nach Anspruch 1, **dadurch gekennzeichnet, daß** eine modulartig aufgebaute Bedienungssoftware verwendet wird.

3. Verfahren nach Anspruch 2, **dadurch gekennzeichnet, daß** von der Bedienungssoftware wenigstens ein Visualisierungsmodul bereitgestellt wird.

4. Verfahren nach Anspruch 2 oder 3, **dadurch gekennzeichnet, daß** von der Bedienungssoftware wenigstens ein Fehlermanagement - Modul bereitgestellt wird.

5. Verfahren nach einem der Ansprüche 2 bis 4, **dadurch gekennzeichnet, daß** von der Bedienungssoftware wenigstens ein NC - Steuerungsmodul (2, 3) bereitgestellt wird.

6. Verfahren nach einem der Ansprüche 2 bis 5, **dadurch gekennzeichnet, daß** von der Bedienungssoftware wenigstens ein Sensorikmodul bereitgestellt wird.

7. Verfahren nach einem der vorhergehenden Ansprüche, **dadurch gekennzeichnet, daß** der NC - Steuerungsbefehl einem Lagekompensationsprozeß unterworfen wird.

8. Verfahren nach einem der vorhergehenden Ansprüche, **dadurch gekennzeichnet, daß** der NC - Steuerungsbefehl einem Orientierungskompensationsprozeß unterworfen wird.

9. Verfahren nach einem der vorhergehenden Ansprüche, **dadurch gekennzeichnet, daß** der NC - Steuerungsbefehl einem Gewichtskompensationsprozeß unterworfen wird.

10. Verfahren nach einem der vorhergehenden Ansprüche, **dadurch gekennzeichnet, daß** der NC - Steuerungsbefehl einem Bauteilkompensationsprozeß unterworfen wird.

11. Verfahren nach einem der vorhergehenden Ansprüche, **dadurch gekennzeichnet, daß** der NC - Steuerungsbefehl einem Anpresskompensationsprozeß unterworfen wird.

12. Verfahren nach einem der vorhergehenden Ansprüche, **dadurch gekennzeichnet, daß** der NC - Steuerungsbefehl einem Roboterkompensationsprozeß unterworfen wird.

13. Verfahren nach einem der vorhergehenden Ansprüche, **dadurch gekennzeichnet, daß** der NC - Steuerungsbefehl einem Achskompensationsprozeß unterworfen wird.

14. Verfahren nach einem der vorhergehenden Ansprüche, **dadurch gekennzeichnet, daß** nach dem Kompensationsprozeß ein Transformieren des NC - Steuerungsbefehls in für die Bewegung der kinematischen Einrichtung geeignete Achs - Koordinaten erfolgt.

## Claims

1. A method for the positionally accurate control of at least one industrial kinetic device, in particular at least one industrial robot, in which control software of the kinetic device is used, and in which control commands for the kinetic device in the form of an NC control command are inputted into operating software, which is upstream of the control software, whereby the inputted NC control command undergoes at least one compensation process for producing a greater positional accuracy and subsequently the NC control command is converted into an instruction of the control software of the device,
**characterised in that**
each compensation process is performed by a data processing program, in which an n-dimensional characteristic map is placed into the area of movement of the kinematic device and variables for location, orientation and weight acting on the kinematic device are determined for an infinite number of points in this characteristic map and, in subsequent movements of the kinematic device, are taken into account in a manner effecting a correction of the movement.

2. The method according to claim 1, **characterised in that** use is made of operating software with a modular structure.

3. The method according to claim 2, **characterised in that** at least one display module is initialised by the operating software.

4. The method according to claim 2 or 3, **characterised in that** at least one fault management module is initialised by the operating software.

5. The method according to any one of claims 2 to 4, **characterised in that** at least one NC control module (2, 3) is initialised by the operating software.

6. The method according to any one of claims 2 to 5, **characterised in that** at least one sensory-analysis module is initialised by the operating software.

7. The method according to any one of the preceding claims, **characterised in that** the NC control command undergoes a position-compensation process.

8. The method according to any one of the preceding claims, **characterised in that** the NC control command undergoes an orientation-compensation process.

9. The method according to any one of the preceding claims, **characterised in that** the NC control command undergoes a weight-compensation process.

10. The method according to any one of the preceding claims, **characterised in that** the NC control command undergoes a component-compensation process.

11. The method according to any one of the preceding claims, **characterised in that** the NC control command undergoes a pressing-compensation process.

12. The method according to any one of the preceding claims, **characterised in that** the NC control command undergoes a robot-compensation process.

13. The method according to any one of the preceding claims, **characterised in that** the NC control command undergoes an axis-compensation process.

14. The method according to any one of the preceding claims, **characterised in that**, after the compensation process, a transformation of the NC control command into axial coordinates suitable for the movement of the kinematic device takes place.

## Revendications

1. Procédé pour la commande en exactitude de position d'au moins un dispositif cinétique industriel, notamment au moins d'un robot industriel, dans lequel est employé un logiciel de commande du dispositif cinétique et dans lequel des ordres de commande pour le dispositif cinétique sont à chaque fois entrés dans un logiciel de service placé en amont du logiciel de commande sous forme d'un ordre de commande de CN, l'ordre de commande de CN entré étant soumis à au moins un processus de compensation visant à obtenir une exactitude de position supérieure et ensuite converti en une instruction du logiciel de commande du dispositif,
**caractérisé en ce**
**que** chaque processus de compensation est effectué par l'intermédiaire d'un programme de traitement de données dans lequel un champ caractéristique en n dimensions est placé dans la zone de mouvement du dispositif cinétique et des grandeurs relatives à la position, l'orientation et le poids agissant sur le dispositif cinématique sont calculées pour un nombre fini de points dans ce champ caractéristique et prises en compte lors des déplacements suivants du dispositif cinétique d'une façon provoquant une correction du mouvement.

2. Procédé selon la revendication 1, **caractérisé en ce qu'**est utilisé un logiciel de service de structure modulaire.

3. Procédé selon la revendication 2, **caractérisé en ce qu'**au moins un module de visualisation est mis à disposition par le logiciel de service.

4. Procédé selon la revendication 2 ou 3, **caractérisé en ce qu'**au moins un module de gestion des erreurs est mis à disposition par le logiciel de service.

5. Procédé selon l'une des revendications 2 à 4, **caractérisé en ce qu'**au moins un module de commande de CN (2, 3) est mis à disposition par le logiciel de service.

6. Procédé selon l'une des revendications 2 à 5, **caractérisé en ce qu'**au moins un module sensoriel est mis à disposition par le logiciel de service.

7. Procédé selon l'une des revendications précédentes, **caractérisé en ce que** l'ordre de commande de CN est soumis à un processus de compensation relatif à la position.

8. Procédé selon l'une des revendications précédentes, **caractérisé en ce que** l'ordre de commande de CN est soumis à un processus de compensation relatif à l'orientation.

9. Procédé selon l'une des revendications précédentes, **caractérisé en ce que** l'ordre de commande de CN est soumis à un processus de compensation relatif au poids.

10. Procédé selon l'une des revendications précédentes, **caractérisé en ce que** l'ordre de commande de CN est soumis à un processus de compensation des composants.

11. Procédé selon l'une des revendications précédentes, **caractérisé en ce que** l'ordre de commande de CN est soumis à un processus de compensation relatif à la pression.

12. Procédé selon l'une des revendications précédentes, **caractérisé en ce que** l'ordre de commande de CN est soumis à un processus de compensation relatif au robot.

13. Procédé selon l'une des revendications précédentes, **caractérisé en ce que** l'ordre de commande de CN est soumis à un processus de compensation des axes.

14. Procédé selon l'une des revendications précédentes, **caractérisé en ce qu'**une transformation de l'ordre de commande de CN en des coordonnées axiales appropriées pour le déplacement du dispositif cinématique s'effectue suite au processus de compensation.
